# EUROPEAN PATENT APPLICATION

(11) **EP 4 686 312 A1**
(43) Date of publication of application: **28.01.2026**
(21) Application number: 24857991.4
(22) Date of filing: 25.06.2024
(51) Int. Cl.: H04W 76/14, H04W 4/80, H04L 69/18

(54) **DEVICE CONNECTION METHOD, ELECTRONIC DEVICE, AND COMPUTER READABLE STORAGE MEDIUM**

(30) Priority: 29.08.2023 CN 202311101834; 31.08.2023 CN 202311134495
(71) Applicant: Huawei Technologies Co., Ltd., Shenzhen, Guangdong 518129 (CN)
(72) Inventor: DING, Mingfei, Shenzhen, Guangdong 518129 (CN); WANG, Xiaozhao, Shenzhen, Guangdong 518129 (CN); WANG, Zuwu, Shenzhen, Guangdong 518129 (CN); ZENG, Hongwei, Shenzhen, Guangdong 518129 (CN)
(74) Representative: Goddar, Heinz J.
(86) International application number: PCT/CN2024/101435
(87) International publication number: WO 2025/044447

(57) **Abstract**

This application provides a device connection method, an electronic device, and a computer-readable storage medium, and relates to the field of terminal technologies. **In** this application, a terminal device may obtain, based on an identifier of a communication protocol in a protocol data packet sent by an auxiliary device, a target communication protocol for communicating with the auxiliary device, and may send a communication protocol acknowledgement packet to the auxiliary device after obtaining the target communication protocol for communicating with the auxiliary device, so that the auxiliary device sends a connection address corresponding to the target communication protocol, and the terminal device may establish, based on the connection address, a communication connection to the auxiliary device according to the compatible communication protocol. This can ensure connection stability and reduce a transmission delay between the terminal device and the auxiliary device.

## Description

This application claims priorities to Chinese Patent Application No. 202311101834.7, filed with the China National Intellectual Property Administration on August 29, 2023 and entitled "DEVICE CONNECTION METHOD, ELECTRONIC DEVICE, AND COMPUTER-READABLE STORAGE MEDIUM", and to Chinese Patent Application No. 202311134495.2, filed with the China National Intellectual Property Administration on August 31, 2023 and entitled "DEVICE CONNECTION METHOD, ELECTRONIC DEVICE, AND COMPUTER-READABLE STORAGE MEDIUM", both of which are incorporated herein by reference in their entireties.

### TECHNICAL FIELD

This application relates to the field of terminal technologies, and in particular, to a device connection method, an electronic device, and a computer-readable storage medium.

### BACKGROUND

With rapid development of terminal software and hardware technologies, terminal products have been applied to all aspects of life, greatly enriching daily activities such as social networking, entertainment, and office work of a user. In addition, auxiliary devices of a terminal are increasingly diversified. For example, auxiliary devices such as a stylus, a headset, and a wireless keyboard are increasingly widely used on the terminal.

Currently, a terminal device is usually connected to an auxiliary device according to a wireless short-range communication protocol, and transmits data by using a wireless short-range communication technology when the user uses the auxiliary device. However, there are many types of existing short-range wireless communication protocols, and different devices may support different short-range wireless communication protocols. Therefore, how to ensure that a connection is established between the terminal device and the auxiliary device according to a compatible communication protocol, to ensure connection stability and reduce a transmission delay between the terminal device and the auxiliary device is an urgent problem to be resolved currently.

### SUMMARY

This application provides a device connection method, an electronic device, and a computer-readable storage medium, so that a compatible communication protocol can be selected between a terminal device and an auxiliary device to establish a connection, thereby ensuring connection stability and reducing a transmission delay between the terminal device and the auxiliary device.

According to a first aspect, a device connection method is provided, applied to a terminal device. The method includes: receiving a protocol data packet from an auxiliary device, where the protocol data packet includes an identifier of one or more communication protocols supported by the auxiliary device; obtaining, based on the identifier of the one or more communication protocols supported by the auxiliary device, a target communication protocol for communicating with the auxiliary device; sending a communication protocol acknowledgement packet to the auxiliary device, where the communication protocol acknowledgement packet includes information about the target communication protocol; receiving, from the auxiliary device, a connection address corresponding to the target communication protocol; and establishing a communication connection to the auxiliary device based on the connection address.

For example, the protocol data packet is generated according to a wireless charging protocol.

For example, the communication protocol acknowledgment packet is generated according to the wireless charging protocol, and the information about the target communication protocol in the communication protocol acknowledgment packet may be an identifier of the target communication protocol, or may be field information indicating that the target communication protocol is used.

In the solution provided in the first aspect, the terminal device may obtain, based on the identifier of the communication protocol in the protocol data packet sent by the auxiliary device, the target communication protocol for communicating with the auxiliary device, and send the communication protocol acknowledgement packet to the auxiliary device after obtaining the target communication protocol for communicating with the auxiliary device, so that the auxiliary device sends the connection address corresponding to the target communication protocol, and the terminal device may establish, based on the connection address, the communication connection to the auxiliary device according to the compatible communication protocol. This can ensure connection stability, and reduce a transmission delay between the terminal device and the auxiliary device.

In a possible implementation, the protocol data packet is an identification data packet generated according to the wireless charging protocol, and the identification data packet carries the identifier of the one or more communication protocols through an identification field. In this way, the identifier of the communication protocol is carried in the identification data packet, so that when the terminal device wirelessly charges the auxiliary device, the auxiliary device does not need to retransmit a new packet to the terminal device. This can reduce duration of establishing the communication connection between the auxiliary device and the terminal device, and improve processing efficiency.

In a possible implementation, before receiving the protocol data packet from the auxiliary device, the method further includes: sending the device detection signal when receiving the attaching event, where the device detection signal is used to detect whether the auxiliary device exists, and the protocol data packet is sent by the auxiliary device after the auxiliary device receives the device detection signal. In this way, in a scenario in which the terminal device charges the auxiliary device, the terminal device sends the device detection signal to the auxiliary device, so that accuracy of charging object detection can be ensured, and a waste of resources caused by charging another device when the another device is attached is avoided.

In a possible implementation, after receiving the protocol data packet from the auxiliary device, the method further includes: charging the auxiliary device based on a charging parameter data packet sent by the auxiliary device, where the charging parameter data packet is generated by the auxiliary device according to the wireless charging protocol after the auxiliary device receives the device detection signal; and sending the communication protocol acknowledgement packet to the auxiliary device includes: sending the communication protocol acknowledgement packet to the auxiliary device after receiving handshake information sent by the auxiliary device, where the communication protocol acknowledgement packet is a data packet for replying to the handshake information, and the handshake information is sent by the auxiliary device to the terminal device after the auxiliary device starts to be charged.

For example, the charging parameter data packet may include an identification packet. In this way, the identification data packet carries the identifier of the one or more communication protocols supported by the auxiliary device, and handshake reply information carries the information about the target communication protocol. In this way, data transmission reliability can be ensured through a handshake mechanism, and when the terminal device wirelessly charges the auxiliary device, the auxiliary device does not need to retransmit a new packet to the terminal device, thereby reducing duration of establishing the communication connection between the auxiliary device and the terminal device, and improving processing efficiency.

In a possible implementation, before receiving the protocol data packet from the auxiliary device, the method further includes: sending a device detection signal when receiving an attaching event, where the device detection signal is used to detect whether the auxiliary device exists; after receiving a charging parameter data packet sent by the auxiliary device, charging the auxiliary device based on the charging parameter data packet, where the charging parameter data packet is generated by the auxiliary device according to a wireless charging protocol after the auxiliary device receives the device detection signal; and sending handshake reply information to the auxiliary device after receiving handshake information sent by the auxiliary device, where the protocol data packet is a data packet sent by the auxiliary device after the auxiliary device receives the handshake reply information. In this way, when the terminal device wirelessly charges the auxiliary device, the communication protocol that is compatible with the terminal device and the auxiliary device can be automatically identified, and the communication connection can be automatically established. In addition, data transmission reliability can be ensured through the handshake mechanism.

In a possible implementation, obtaining, based on the identifier of the one or more communication protocols supported by the auxiliary device, the target communication protocol for communicating with the auxiliary device includes: obtaining, based on the identifier of the one or more communication protocols supported by the auxiliary device, a communication protocol that can be supported by the terminal device, and a preset communication rule, the target communication protocol for communicating with the auxiliary device.

For example, the preset communication rule may be that communication protocols with top N priorities are used as target communication protocols, where N is a positive integer greater than or equal to 1.

For example, when obtaining, based on the identifier of the one or more communication protocols supported by the auxiliary device, the communication protocol that can be supported by the terminal device, and the preset communication rule, the target communication protocol for communicating with the auxiliary device, the terminal device may first obtain, based on the identifier, the communication protocol that can be supported by the auxiliary device. Then, a communication protocol supported by both the auxiliary device and the terminal device is obtained based on the communication protocol that can be supported by the auxiliary device and the communication protocol that can be supported by the terminal device. Then, the target communication protocol is obtained, according to the preset communication rule, from the communication protocols supported by both the auxiliary device and the terminal device. In this way, the target communication protocol that is more compatible, has more stable data transmission, and has a smaller transmission delay can be obtained.

In a possible implementation, the communication protocol is a wireless short-range communication protocol, and the wireless short-range communication protocol includes a SparkLink Alliance protocol and a Bluetooth protocol. In this way, the connection between the terminal device and the auxiliary device may be established according to the wireless short-range communication protocol, so that the terminal device and the auxiliary device implement mutual communication or operation within a short-distance range. Further, if the connection between the terminal device and the auxiliary device is established according to the SparkLink Alliance protocol, stability of the connection between the terminal device and the auxiliary device can be further improved, and a transmission delay can be reduced.

In a possible implementation, the target communication protocol is one of the one or more communication protocols supported by the auxiliary device. Establishing the communication connection to the auxiliary device based on the connection address includes: sending a connection prompt message to a user, where the connection prompt message is a prompt message indicating whether the user establishes a connection to the auxiliary device according to the target communication protocol; and after receiving an operation of determining the connection by the user, establishing the communication connection to the auxiliary device based on the connection address.

For example, the connection prompt message may be sent through a pop-up window service, and the pop-up window service may display the connection prompt message in a display interface of the terminal device in a style like a dialog box, a function box, or a dialog prompt message box.

In this way, the connection prompt message is sent to the user, so that a misconnection between the terminal device and the auxiliary device can be avoided when the user does not need the connection between the terminal device and the auxiliary device.

In a possible implementation, the target communication protocol is at least two of the one or more communication protocols supported by the auxiliary device. Establishing the communication connection to the auxiliary device based on the connection address includes: sending a connection prompt message to a user, where the connection prompt message includes the connection address of the target communication protocol, and the connection prompt message is a prompt message that indicates the user to determine, from a plurality of connection addresses, a connection address to which a connection needs to be established; and after receiving a target connection address for a connection specified by the user, establishing the communication connection to the auxiliary device based on the target connection address. In this way, the connection prompt message enables the user to establish a connection according to a required communication protocol, to facilitate a user operation and better meet a user requirement.

In a possible implementation, sending the connection prompt message to the user includes: obtaining a connection detection result of the auxiliary device based on a mode identifier sent by the auxiliary device; and if the connection detection result of the auxiliary device indicates that the auxiliary device can be connected, sending the connection prompt message to the user. In this way, whether the auxiliary device can be connected is detected based on the mode identifier, so that a connection mismatch between the terminal device and the auxiliary device can be found in time, and a subsequent connection operation is avoided. This reduces a workload.

According to a second aspect, a device connection method is provided, applied to an auxiliary device. The method includes: sending a protocol data packet to a terminal device, where the protocol data packet includes an identifier of one or more communication protocols supported by the auxiliary device; receiving a communication protocol acknowledgement packet sent by the terminal device; obtaining, based on information in the communication protocol acknowledgement packet, a target communication protocol for communicating with the terminal device; and sending a connection address corresponding to the target communication protocol to the terminal device, where the connection address indicates the terminal device to establish a communication connection based on the connection address.

For example, the protocol data packet is generated according to a wireless charging protocol.

For example, the communication protocol acknowledgment packet is generated according to the wireless charging protocol, and the information about the target communication protocol in the communication protocol acknowledgment packet may be an identifier of the target communication protocol, or may be field information indicating that the target communication protocol is used.

In the solution provided in the second aspect, the terminal device may obtain, based on the identifier of the communication protocol in the protocol data packet sent by the auxiliary device, the target communication protocol for communicating with the auxiliary device, and send the communication protocol acknowledgement packet to the auxiliary device after obtaining the target communication protocol for communicating with the auxiliary device, so that the auxiliary device sends the connection address corresponding to the target communication protocol, and the terminal device may establish, based on the connection address, the communication connection to the auxiliary device according to the compatible communication protocol. This can ensure connection stability, and reduce a transmission delay between the terminal device and the auxiliary device.

In a possible implementation, sending the protocol data packet to the terminal device includes: sending the protocol data packet to the terminal device when receiving a device detection signal sent by the terminal device, where the protocol data packet is an identification data packet generated according to the wireless charging protocol, and the identification data packet carries the identifier of the one or more communication protocols through an identification field. In this way, the identifier of the communication protocol is carried in the identification data packet, so that when the terminal device wirelessly charges the auxiliary device, the auxiliary device does not need to retransmit a new packet to the terminal device. This can reduce duration of establishing the communication connection between the auxiliary device and the terminal device, and improve processing efficiency. In addition, in a scenario in which the terminal device charges the auxiliary device, the terminal device sends the device detection signal to the auxiliary device, so that accuracy of charging object detection can be ensured, and a waste of resources caused by charging another device when the another device is attached is avoided.

In a possible implementation, before receiving the communication protocol acknowledgement packet sent by the terminal device, the method further includes: sending handshake information to the terminal device in response to a charging operation performed by the terminal device based on a charging parameter data packet, where the communication protocol acknowledgement packet is sent by the terminal device after the terminal device receives the handshake information, and the charging parameter data packet is generated by the auxiliary device according to the wireless charging protocol after the auxiliary device receives the device detection signa, and is sent to the terminal device.

For example, the charging parameter data packet may include an identification packet. In this way, the identification data packet carries the identifier of the one or more communication protocols supported by the auxiliary device, and handshake reply information carries the information about the target communication protocol. In this way, data transmission reliability can be ensured through a handshake mechanism, and when the terminal device wirelessly charges the auxiliary device, the auxiliary device does not need to retransmit a new packet to the terminal device, thereby reducing duration of establishing the communication connection between the auxiliary device and the terminal device, and improving processing efficiency.

In a possible implementation, sending the protocol data packet to the terminal device includes: sending a charging parameter data packet to the terminal device when receiving a device detection signal sent by the terminal device; sending handshake information to the terminal device in response to a charging operation performed by the terminal device based on a charging parameter data packet; and sending the protocol data packet to the terminal device after receiving handshake reply information sent by the terminal device. In this way, when the terminal device wirelessly charges the auxiliary device, the communication protocol that is compatible with the terminal device and the auxiliary device can be automatically identified, and the communication connection can be automatically established. In addition, data transmission reliability can be ensured through the handshake mechanism.

In a possible implementation, after sending the connection address corresponding to the target communication protocol to the terminal device, the method further includes: sending a mode identifier to the terminal device, where the mode identifier is used to assist the terminal device in determining a connection detection result of the auxiliary device. In this way, whether the auxiliary device can be connected is detected based on the mode identifier, so that a connection mismatch between the terminal device and the auxiliary device can be found in time, and a subsequent connection operation is avoided. This reduces a workload.

In a possible implementation, the communication protocol is a wireless short-range communication protocol, and the wireless short-range communication protocol includes a SparkLink Alliance protocol and a Bluetooth protocol. In this way, the connection between the terminal device and the auxiliary device may be established according to the wireless short-range communication protocol, so that the terminal device and the auxiliary device implement mutual communication or operation within a short-distance range. Further, if the connection between the terminal device and the auxiliary device is established according to the SparkLink Alliance protocol, stability of the connection between the terminal device and the auxiliary device can be further improved, and a transmission delay can be reduced.

According to a third aspect, an electronic device is provided, including: a memory, configured to store computer program instructions; and a processor, configured to execute the computer program instructions, to support the electronic device in implementing the method according to any possible implementation of the first aspect or implementing the method according to any possible implementation of the second aspect.

For example, when the electronic device is a terminal device, the method according to any possible implementation of the first aspect is implemented. When the electronic device is an auxiliary device, the method according to any possible implementation of the second aspect is implemented.

According to a fourth aspect, a computer-readable storage medium is provided. The computer-readable storage medium stores computer program instructions. When the computer program instructions are executed by a processing circuit, the method in any possible implementation of the first aspect or the method in any possible implementation of the second aspect is implemented.

According to a fifth aspect, a chip system is provided. The chip system includes a processing circuit and a storage medium. The storage medium stores computer program instructions. When the computer program instructions are executed by the processing circuit, the method according to any possible implementation of the first aspect or the method according to any possible implementation of the second aspect is implemented.

According to a sixth aspect, a computer program product including instructions is provided. When the computer program product runs on a computer, the computer is enabled to perform the method according to any possible implementation of the first aspect or implement the method according to any possible implementation of the second aspect.

According to a seventh aspect, a terminal device is provided, and is configured to perform the method according to any possible implementation of the first aspect.

According to an eighth aspect, an auxiliary device is provided, and is configured to perform the method according to any possible implementation of the second aspect.

According to a ninth aspect, a communication system is provided, including an auxiliary device and a terminal device. The terminal device is configured to implement the method according to any possible implementation of the first aspect, and the auxiliary device is configured to implement the method according to any possible implementation of the second aspect.

According to a tenth aspect, an operating system is provided. When the operating system is run on a computer, the computer is enabled to perform the method according to any possible implementation of the first aspect or the method according to any possible implementation of the second aspect.

### BRIEF DESCRIPTION OF DRAWINGS

FIG. 1 is a diagram of a scenario in which a terminal device wirelessly charges an auxiliary device according to an embodiment of this application;
FIG. 2 is a diagram of a structure of a terminal device according to an embodiment of this application;
FIG. 3 is a block diagram of a software structure of a terminal device according to an embodiment of this application;
FIG. 4 is a diagram of an operating principle of establishing a communication connection between a terminal device and an auxiliary device during wireless charging according to an embodiment of this application;
FIG. 5 is a schematic flowchart 1 of a device connection method according to an embodiment of this application;
FIG. 6 is a diagram 1 of an interface of a terminal device according to an embodiment of this application;
FIG. 7 is a diagram 2 of an interface of a terminal device according to an embodiment of this application;
FIG. 8 is a schematic flowchart 2 of a device connection method according to an embodiment of this application;
FIG. 9 is an interaction diagram 1 of a device connection method according to an embodiment of this application;
FIG. 10 is a schematic flowchart 3 of a device connection method according to an embodiment of this application;
FIG. 11 is an interaction diagram 2 of a device connection method according to an embodiment of this application;
FIG. 12 is a schematic flowchart 4 of a device connection method according to an embodiment of this application;
FIG. 13 is a diagram of a structure of an identification data packet according to an embodiment of this application; and
FIG. 14 is an interaction diagram 3 of a device connection method according to an embodiment of this application.

### DESCRIPTION OF EMBODIMENTS

The following describes technical solutions in embodiments of this application with reference to accompanying drawings in embodiments of this application.

The terms "including" and "having" and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

The terms "first" and "second" mentioned below are merely intended for a purpose of descriptions, and shall not be understood as an indication or implication of relative importance or implicit indication of a quantity of indicated technical features. Therefore, a feature limited by "first", "second", or the like may explicitly or implicitly include one or more features.

In embodiments of this application, the term like "example" or "for example" is used to represent giving an example, an illustration, or descriptions. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "a plurality of" means two or more than two. A term "and/or" in this specification describes only an association relationship between associated objects and indicates that there may be three relationships. For example, A and/or B may represent the following three cases: Only A exists, both A and B exist, and only B exists.

For example, in the background part, with rapid development of terminal software and hardware technologies, terminal products have been applied to all aspects of life, greatly enriching daily activities such as social networking, entertainment, and office work of a user. In addition, auxiliary devices of a terminal are increasingly diversified. For example, auxiliary devices such as a stylus, a headset, and a wireless keyboard are increasingly widely used on the terminal.

Currently, a terminal device is usually connected to an auxiliary device according to a wireless short-range communication protocol, and transmits data by using a wireless short-range communication technology when the user uses the auxiliary device. For example, the stylus may be connected to the terminal device by using a Bluetooth technology. When a nib of the stylus is placed above a display of the device, a coding module of the stylus may interact with a display module of the device, to transfer a Bluetooth MAC address of the stylus, to trigger the stylus to establish a Bluetooth pairing connection to an electronic device.

However, with continuous development of wireless short-range communication technologies, more wireless short-range communication protocols emerge, for example, a SparkLink Alliance protocol. SparkLink is a next-generation short-range wireless communication technology developed in recent years. A SparkLink connection is more stable and has a low delay. However, because different wireless short-range communication protocols correspond to different MAC addresses and different connection technologies, different devices can support different wireless short-range communication protocols. In view of this, how to ensure that a connection is established between the terminal device and the auxiliary device according to a compatible communication protocol, to ensure connection stability and reduce a transmission delay between the terminal device and the auxiliary device is an urgent problem to be resolved currently.

Based on the foregoing problem, an embodiment of this application provides a device connection method. The terminal device may obtain, based on an identifier of a communication protocol in a protocol data packet sent by the auxiliary device, a target communication protocol for communicating with the auxiliary device, and send a communication protocol acknowledgement packet to the auxiliary device after obtaining the target communication protocol for communicating with the auxiliary device, so that the auxiliary device sends a connection address corresponding to the target communication protocol, and the terminal device may establish, based on the connection address, a communication connection to the auxiliary device according to a compatible communication protocol. This can ensure connection stability, and reduce a transmission delay between the terminal device and the auxiliary device.

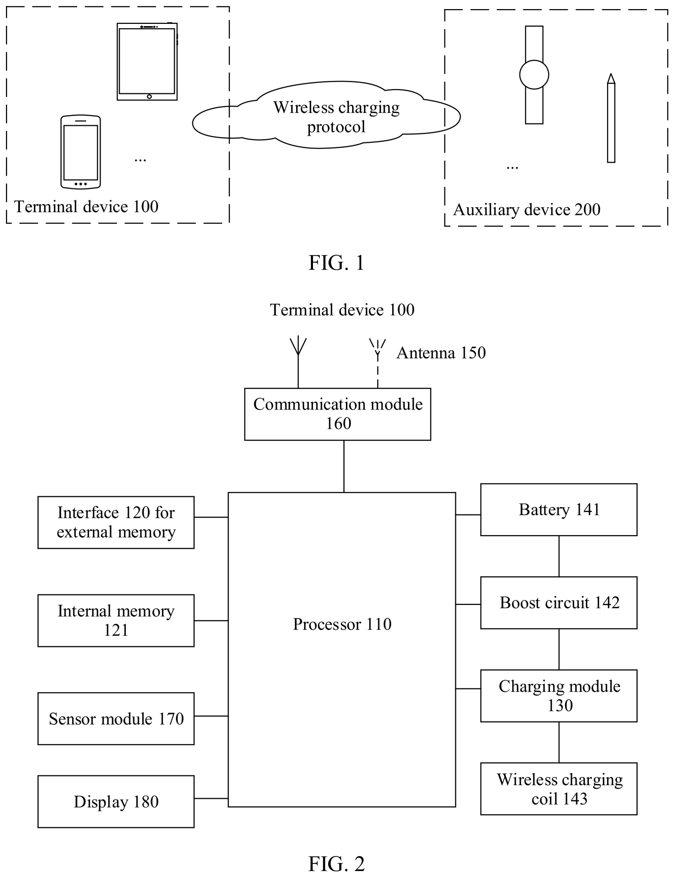

The device connection method provided in embodiments of this application may be used for a connection between the terminal device and the auxiliary device. Specifically, the device connection method may be used to establish the connection between the terminal device and the auxiliary device in a scenario in which the terminal device and the auxiliary device perform wireless charging. FIG. 1 shows a scenario in which a terminal device 100 wirelessly charges an auxiliary device 200.

The terminal device 100 may be an electronic device that can wirelessly charge another device and may be any one of a smartphone, a tablet computer, a notebook computer, an e-book reader, a multimedia playback device, a wearable device, a PC (Personal Computer, personal computer), and a smart home appliance. The auxiliary device 200 may be a device that can perform charging with the terminal device 100 in a wireless charging manner. For example, the auxiliary device 200 is a stylus, a headset, a wireless keyboard, a band, or the like.

For ease of understanding, the following specifically describes the terminal device 100 according to an embodiment of this application. FIG. 2 is a diagram of a structure of the terminal device 100 according to an embodiment of this application. As shown in FIG. 2, the terminal device 100 may include a processor 110, an interface for external memory 120, an internal memory 121, a charging module 130, a battery 141, a boost circuit 142, a wireless charging coil 143, an antenna 150, a communication module 160, a sensor module 170, a display 180, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The interface for external memory 120 may be configured to connect to an external storage card, for example, a micro SD card, to extend a storage capability of the terminal device 100. The external memory card communicates with the processor 110 through the interface for external memory 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data) created when the terminal device 100 is used, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121, and/or instructions stored in memory disposed in the processor, to execute various function applications and data processing of the terminal device 100.

The charging module 130 is configured to receive a charging input from a charger. The charger may be a wireless charger or a wired charger. In some embodiments of wireless charging, the charging module 130 may receive a wireless charging input through the wireless charging coil 143 of the terminal device 100, to charge the battery 141. When charging the battery 141, the charging module 130 may be further configured to supply power to the terminal device 100.

In this embodiment of this application, the charging module 130 may include a wireless charging chip, and the terminal device 100 may supply power to the auxiliary device 200 via the battery 141, the boost circuit 142, and the wireless charging coil 143.

A wireless communication function of the terminal device 100 may be implemented via the antenna 150, the communication module 160, and the like. The antenna 150 is configured to transmit and receive electromagnetic wave signals. Each antenna 150 in the terminal device 100 may be configured to cover one or more communication frequency bands. Different antennas may be further multiplexed, to improve antenna utilization. For example, the antenna 150 may be multiplexed as a diversity antenna in a wireless local area network. In some other embodiments, the antenna may be used in combination with a tuning switch.

The communication module 160 includes a mobile communication module and a wireless communication module. The mobile communication module may provide a wireless communication solution that is applied to the electronic device 100 and that includes 2G/3G/4G/5G or the like. The mobile communication module may include at least one filter, a switch, a power amplifier, a low noise amplifier (low noise amplifier, LNA), and the like. The mobile communication module may receive an electromagnetic wave through the antenna 150, perform processing like filtering or amplification on the received electromagnetic wave, and transmit the electromagnetic wave to the modem processor for demodulation. The mobile communication module may further amplify a signal modulated by the modem processor, and convert the signal into an electromagnetic wave for radiation through the antenna 150.

The wireless communication module may provide a wireless communication solution that is applied to the terminal device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module may be one or more components that integrate at least one communication processing module. The wireless communication module receives an electromagnetic wave through the antenna 150, performs frequency modulation and filtering processing on an electromagnetic wave signal, and sends a processed signal to the processor 110. The wireless communication module may further receive a to-be-sent signal from the processor 110, perform frequency modulation and amplification on the signal, and convert the signal into an electromagnetic wave for radiation through the antenna 150.

In this embodiment of this application, the wireless communication module may include a short-range chip, and implement a wireless short-range communication technology based on the short-range chip. The short-range chip may include a SparkLink chip, a Bluetooth chip, and the like.

The display 180 is configured to display an image, a video, and the like.

The sensor module 170 may include a magnetic field sensor, a touch sensor, and the like. The terminal device 100 may detect magnetic field strength of the terminal device 100 via the magnetic field sensor, and implement a touch function via the touch sensor.

In this embodiment of this application, the processor 110 may detect, via the touch sensor, a touch operation like a tap (for example, a single tap or a double tap) operation, a slide operation, a touch and hold operation, or a drag operation performed by the user in an interface provided by the display, to determine a specific intention corresponding to the touch operation, and respond to the touch operation.

It may be understood that the structure shown in this embodiment of the present invention does not constitute a specific limitation on the terminal device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

In embodiments of this application, a software system of the terminal device 100 may use a layered architecture, an event-driven architecture, a microkernel architecture, a microservice architecture, or a cloud architecture. In embodiments of this application, an Android system with a layered architecture is used as an example to illustrate the software structure of the terminal device 100.

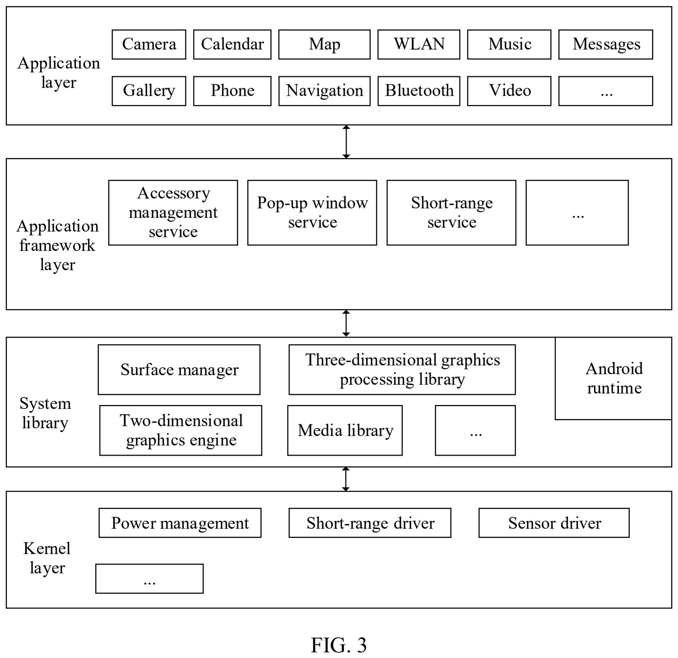

FIG. 3 is a block diagram of the software structure of the terminal device 100 according to this embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android Runtime) and system library, and a kernel layer from top to bottom.

The application layer may include a series of application packages, such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer may include an accessory management service, a pop-up window service, a short-range service, and the like. The accessory management service is used to manage the auxiliary device 200, the pop-up window service is used to display notification information and perform an interaction operation with a user, and the short-range service is used to establish a connection to the auxiliary device 200 based on a short-range communication technology.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Library), a three-dimensional graphics processing library (for example, OpenGL ES), and a 2D graphics engine (for example, SGL).

The kernel layer is a layer between hardware and software. The kernel layer includes at least a sensor driver, a short-range driver, power management, and the like.

It may be understood that, in this embodiment of this application, the auxiliary device 200 and the terminal device 100 may have a same or similar structure. Details are not described herein again.

In some embodiments, the auxiliary device 200 includes at least components such as a processor, an internal memory, a wireless charging coil, a charging module, a communication module, and an antenna. For specific functions, refer to the descriptions of the terminal device 100. Details are not described herein again.

It may be understood that the wireless charging coil in the terminal device and the wireless charging coil in the auxiliary device may form electromagnetic induction, to perform wireless charging through electromagnetic induction. For details, refer to an existing explanation. Details are not described herein.

To further facilitate the terminal device to wirelessly charge the auxiliary device, in this embodiment of this application, an attachment area used for attaching the auxiliary device 200 is disposed on the terminal device 100, and a magnetic component, for example, a magnetic metal strip, is disposed at a location that is inside or on a surface of the terminal device 100 and that corresponds to the attachment area. At least one magnetic attachment component is disposed in the auxiliary device 200. The magnetic attachment component may attract the magnetic component of the terminal device 100 when the auxiliary device 200 approaches or is in contact with the attachment area, to attach and fasten the auxiliary device 200 in the attachment area. After the auxiliary device 200 is attached and fastened in the attachment area, the terminal device 100 may charge the auxiliary device.

In this embodiment of this application, a magnetic field sensor, for example, a Hall effect sensor, may be disposed at a location that is inside the terminal device 100 and that corresponds to the attachment area. The terminal device 100 may perform magnetic field strength detection on the attachment area via the magnetic field sensor, to determine whether the auxiliary device 200 is fastened to the attachment area.

Based on the diagrams of the structures shown in FIG. 1 to FIG. 3, FIG. 4 is a diagram of an operating principle of establishing a communication connection between the terminal device 100 and the auxiliary device 200 during wireless charging according to an embodiment of this application.

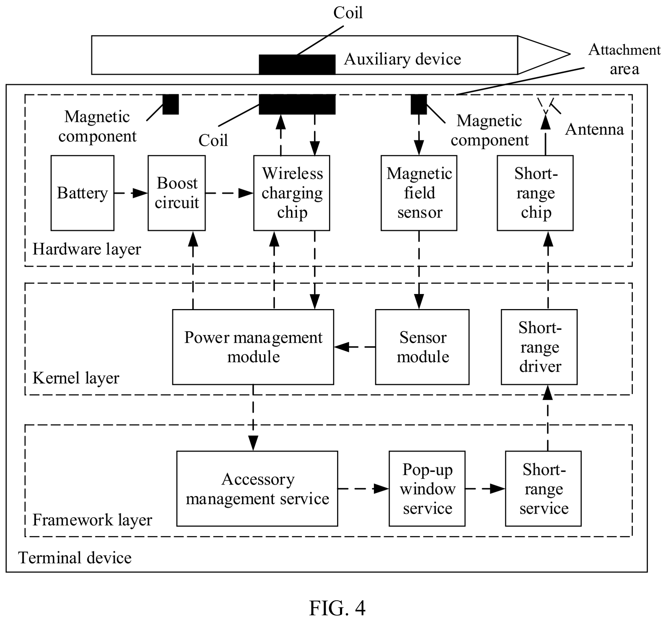

As shown in FIG. 4, the magnetic field sensor detects the magnetic field strength of the attachment area, and transfers a detection result to a sensor module (sensor driver). When determining, based on the detection result, that the auxiliary device is attached to the attachment area, the sensor module may report an attaching event to a power management module. After receiving the attaching event of the auxiliary device, the power management module may control, according to a wireless charging protocol, a battery, a boost circuit, and a wireless charging chip to charge the auxiliary device.

When the auxiliary device is charged, the power management module and the auxiliary device may exchange a communication protocol, a connection address, and the like that are used for communication. After obtaining the connection address, the power management module transmits the connection address to the accessory management service. After receiving the connection address, the accessory management service sends an instruction to the pop-up window service, so that the pop-up window service displays a pop-up prompt message in a display interface of the terminal device. After receiving a connection operation delivered by the user based on the pop-up window prompt message, the pop-up window service may send a connection operation instruction to the short-range service. After receiving the connection operation instruction, in response to the connection operation instruction, the short-range service initiates a connection operation on the auxiliary device, and controls, via the short-range driver, the short-range chip to send a signal to the connection address through the antenna, so as to perform a directional connection, and establish a communication between the terminal device and the auxiliary device.

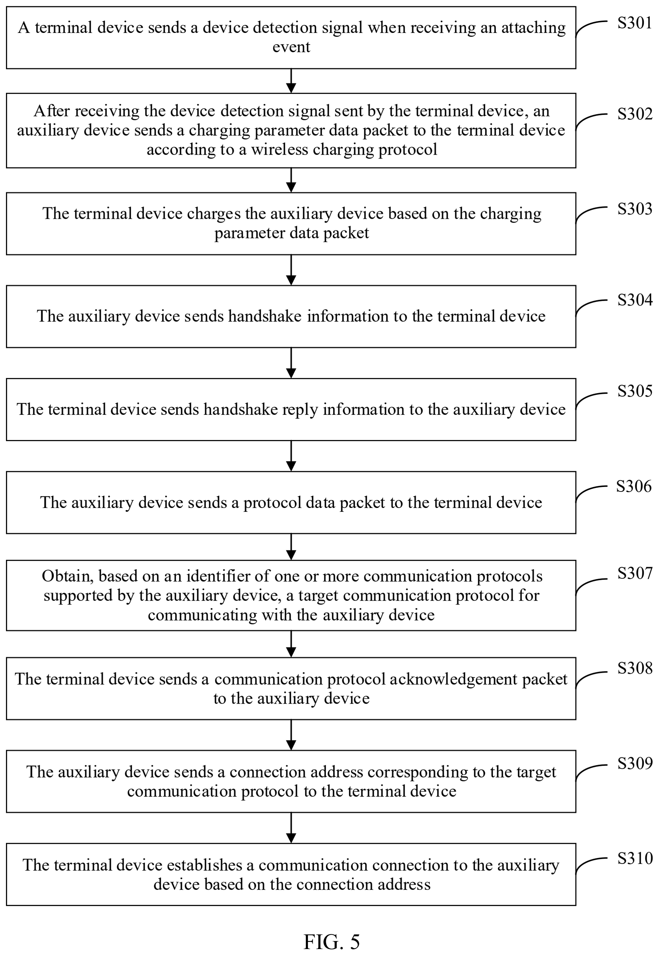

To better describe an interaction process in which the terminal device and the auxiliary device determine a communication protocol and a connection address that are used for communication, refer to FIG. 5. FIG. 5 is a schematic flowchart of a device connection method according to an embodiment of this application. As shown in FIG. 5, the device connection method provided in this embodiment of this application includes the following steps.

S301: A terminal device sends a device detection signal when receiving an attaching event.

A magnetic field sensor of the terminal device detects magnetic field strength of an attachment area, and transfers a detection result to a sensor module. When determining, based on the detection result, that a device is attached to the attachment area, the sensor module may report the attaching event to a power management module.

After receiving the attaching event, the power management module may control a switch of a boost circuit to be turned on, so that a battery supplies power to a wireless charging chip. After detecting that a voltage of the wireless charging chip is within a normal range, the power management module controls the wireless charging chip to send the device detection signal.

For example, the wireless charging chip may apply a power signal to a wireless charging coil, to send the device detection signal.

In this embodiment of this application, the device detection signal may be a ping signal. Whether an auxiliary device exists may be determined by sending the ping signal, to avoid a waste of resources caused by charging another device when the another device is attached.

S302: After receiving the device detection signal sent by the terminal device, the auxiliary device sends a charging parameter data packet to the terminal device according to a wireless charging protocol.

In this embodiment of this application, the terminal device may wirelessly charge the auxiliary device according to the wireless charging protocol. In a wireless charging process, the terminal device and the auxiliary device may interact with each other based on different data packets in different charging phases, to obtain information about the two parties.

As shown in Table 1, Table 1 shows some data packets generated according to the wireless charging protocol, and different data packets have different headers. A data packet generated according to the wireless charging protocol includes four parts: a preamble, a header, a message, and a checksum. For details, refer to a conventional technology. Details are not described herein.

**Table 1**

| Header | Data packet type |
|---|---|
| 0x01 | Signal strength (signal strength) |
| Ox38 | Proprietary (proprietary) |
| 0x51 | Configuration (configuration) parameter |
| Ox58 | Proprietary (proprietary) |
| Ox71 | Identification (identification) |
| Ox3F | Proprietary (proprietary) |
| Ox5F | Proprietary (proprietary) |

For example, in this embodiment of this application, after receiving the device detection signal sent by the terminal device, the auxiliary device may send, in response to the device detection signal, the charging parameter data packet to the terminal device according to the wireless charging protocol, to indicate that the terminal device has received the device detection signal; and the auxiliary device may perform wireless charging according to the wireless charging protocol.

The charging parameter data packet includes a signal strength data packet, a configuration parameter data packet, and the like.

The signal strength data packet includes signal strength of the device detection signal received by the auxiliary device, and the signal strength data packet may be used to detect a coupling degree between a wireless charging coil of the auxiliary device and a wireless charging coil of the terminal device, to indicate whether the auxiliary device is correctly attached to the attachment area. When the signal strength is high, it indicates that the coupling degree between the wireless charging coil of the auxiliary device and the wireless charging coil of the terminal device is high, so that it is determined that the auxiliary device is correctly attached to the attachment area. When the signal strength is low, it indicates that the coupling degree between the wireless charging coil of the auxiliary device and the wireless charging coil of the terminal device is low, so that it is determined that the auxiliary device is not correctly attached to the attachment area.

The configuration parameter data packet includes power information required when the auxiliary device is charged, and configuration parameter data indicates the terminal device to output power based on required power, to charge the auxiliary device.

In some embodiments, the charging parameter data packet may further include an identification data packet, and the identification data packet includes attribute information of the auxiliary device, for example, information like a version number of a used chip, a customer code, and a manufacturer code. The identification data packet is used to identify an identification of the auxiliary device.

S303: The terminal device charges the auxiliary device based on the charging parameter data packet.

After receiving the charging parameter data packet, the wireless charging chip of the terminal device may send the charging parameter data packet to the power management module. After the power management module receives the charging parameter data packet, it may be determined that the auxiliary device exists, and the power management module may charge the auxiliary device based on the charging parameter data packet.

For example, the power management module may identify and store the identification of the auxiliary device based on the identification data packet, and then determine, based on the signal strength in the signal strength data packet, whether the auxiliary device is correctly attached to the attachment area. When it is determined that the auxiliary device is correctly attached to the attachment area, the wireless charging chip may be controlled to charge the auxiliary device based on the power information in the configuration parameter data packet. When it is determined that the auxiliary device is not correctly attached to the attachment area, the wireless charging chip may be controlled not to charge the auxiliary device.

Optionally, when the signal strength is less than a specified strength threshold, it may indicate that the auxiliary device is not correctly attached to the attachment area. When the signal strength is greater than the specified strength threshold, it may indicate that the auxiliary device is correctly attached to the attachment area. The specified strength threshold may be set based on an actual requirement.

In some implementations, when it is learned that the auxiliary device is not correctly attached to the attachment area, the power management module may further send, to an accessory management service, information indicating that the auxiliary device is not correctly attached to the attachment area. After receiving the information, the accessory management service may send an indication to a pop-up window service, so that the pop-up window service displays, in a display interface of the terminal device, a prompt message that the auxiliary device is not correctly attached. It may be understood that, when a user sees the prompt message, the user may adjust the auxiliary device, so that the auxiliary device is correctly attached to the attachment area of the terminal device.

It may be understood that, the auxiliary device may sequentially send or simultaneously send, to the terminal device, data packets such as the signal strength data packet, the configuration parameter data packet, and the identification data packet that are included in the charging parameter data packet. This is not specifically limited, and may be set based on an actual requirement. When the data packets such as the signal strength data packet, the configuration parameter data packet, and the identification data packet are sequentially sent, a sending sequence of the data packets may be further set based on a requirement. This is not specifically limited. For example, the auxiliary device may sequentially send the signal strength data packet, the identification data packet, and the configuration parameter data packet to the terminal device.

It may be understood that, when the wireless charging chip is controlled to charge the auxiliary device based on the power information in the configuration parameter data packet, the auxiliary device can be powered on. After the auxiliary device is powered on, the auxiliary device can establish a communication connection to the terminal device, to exchange information.

To improve data transmission reliability, in this embodiment of this application, before the auxiliary device establishes the communication connection to the terminal device, the device connection method may further include S304 and S305.

S304: The auxiliary device sends handshake information to the terminal device.

Before establishing the communication connection to the terminal device, the auxiliary device may confirm identities of the communication auxiliary device and the terminal device, perform data negotiation, and the like through a handshake signal, to ensure reliability and security of data transmission.

For example, after the terminal device charges the auxiliary device, the auxiliary device is powered on, and the auxiliary device may send a handshake data packet to the terminal device.

In this embodiment of this application, the auxiliary device and the terminal device may perform handshake interaction according to the wireless charging protocol by sending a proprietary data packet.

For example, the auxiliary device may send a proprietary protocol packet with a header of "0x38" to the terminal device according to the wireless charging protocol, to perform a handshake. That is, the handshake information may include the proprietary protocol packet with a header of "0x38". Data information of the proprietary protocol packet may be set based on a requirement, provided that the terminal device and the auxiliary device can identify the data information. For example, the handshake information may be a proprietary protocol packet "0x38 0x3b 0x88 0x66", where 0x3b 0x88 0x66 is data information in the proprietary protocol packet.

In some embodiments, handshake interaction may alternatively be performed between the auxiliary device and the terminal device according to another communication protocol. This is not limited herein.

S305: The terminal device sends handshake reply information to the auxiliary device.

After receiving the handshake information sent by the auxiliary device, the wireless charging chip of the terminal device may send the handshake information to the power management module. In response to the handshake information, the battery management module sends the handshake reply information to the auxiliary device via the wireless charging chip, to indicate that the auxiliary device can send data.

It may be understood that the terminal device may alternatively send the handshake reply information to the auxiliary device according to the wireless charging protocol. For example, the auxiliary device may send the proprietary protocol packet with the header of "0x38 0x3b 0x88 0x66" to the terminal device according to the wireless charging protocol, to perform a handshake. After receiving the handshake information, the terminal device may send a packet with a header of "0x3F 0x3b 0x88 0x66" to the auxiliary device according to the wireless charging protocol, to reply to the handshake. To be specific, the handshake reply information sent by the terminal device may include the proprietary protocol packet "0x3F 0x3b 0x88 0x66", where 0x3F is a header of the proprietary protocol packet, and 0x3b 0x88 0x66 is data information in the proprietary protocol packet.

S306: The auxiliary device sends a protocol data packet to the terminal device.

After receiving the handshake reply information sent by the terminal device, the auxiliary device indicates that the handshake with the terminal device is completed, and may further establish the communication connection.

In this embodiment of this application, the auxiliary device and the terminal device may establish a communication connection according to a communication protocol.

The communication protocol between the terminal device and the auxiliary device may be a wireless short-range communication protocol, for example, a SparkLink Alliance protocol or a Bluetooth protocol.

Considering that the terminal device and the auxiliary device may support different communication protocols, for example, the auxiliary device may support the Bluetooth communication protocol for establishment of a communication connection, and the terminal device may support the SparkLink Alliance protocol for establishment of a communication protocol, communication protocols supported by the terminal device and the auxiliary device are different. When the terminal device and the auxiliary device support different communication protocols, if an incompatible communication protocol is selected to establish the communication connection, the communication connection between the terminal device and the auxiliary device may be unstable, and data transmission has a large delay. To select a compatible and correct communication protocol to establish the communication connection between the terminal device and the auxiliary device, the auxiliary device may send the protocol data packet to the terminal device.

In this embodiment of this application, the protocol data packet may alternatively be sent to the terminal device according to the wireless charging protocol. For example, a data packet with a header of "0x58" may be sent to the terminal device according to the wireless charging protocol.

In this embodiment of this application, the protocol data packet includes an identifier of one or more communication protocols supported by the auxiliary device. It may be understood that identifiers vary with communication protocols.

In this embodiment of this application, in the protocol data packet, the identifier of the communication protocol may be represented by using a field. Different identifiers use different fields. For example, when the auxiliary device supports a communication protocol A, the protocol data packet may include an identification field X1 corresponding to the communication protocol A; and when the auxiliary device supports a protocol B, the protocol data packet may include an identification field X2 corresponding to the communication protocol B.

S307: Obtain, based on the identifier of the one or more communication protocols supported by the auxiliary device, a target communication protocol for communicating with the auxiliary device.

After receiving the protocol data packet, the wireless charging chip of the terminal device sends the protocol data packet to the power management module, and the power management module parses the protocol data packet to obtain the identifier in the protocol data packet.

Optionally, the terminal device stores the identifier of the communication protocol. After obtaining the identifier in the protocol data packet, the terminal device compares the identifier in the protocol data packet with the stored identifier, to obtain communication protocols supported by the auxiliary device.

After the communication protocols supported by the auxiliary device are obtained, it may be determined, from the communication protocols supported by the auxiliary device, whether there is a communication protocol supported by the auxiliary device. That is, a communication protocol that can be supported by both the terminal device and the auxiliary device is obtained from the communication protocols supported by the auxiliary device. After the communication protocol that can be supported by both the terminal device and the auxiliary device is obtained, the communication protocol that can be supported by both the terminal device and the auxiliary device may be determined as the target communication protocol.

Considering that there may be a plurality of communication protocols that can be supported by both the terminal device and the auxiliary device at the same time, to select a communication protocol that is more compatible, more stable for data transmission, and has a shorter delay, in this embodiment of this application, the target communication protocol for communicating with the auxiliary device may be further obtained based on the identifier of the one or more communication protocols supported by the auxiliary device, a communication protocol that can be supported by the terminal device, and a preset communication rule. It may be understood that the target communication protocol is a communication protocol in the one or more communication protocols supported by the accessory device.

Alternatively, the preset communication rule may be that communication protocols with top N priorities are used as target communication protocols, where N is a positive integer greater than or equal to 1. The priority of the communication protocol may be set based on an actual requirement. This is not specifically limited in this embodiment of this application. For example, a priority of the SparkLink Alliance protocol is higher than a priority of the Bluetooth protocol.

In some embodiments, the preset communication rule may alternatively be that a communication protocol that is most frequently used by the terminal device, a communication protocol with a fastest transmission speed, or the like is the target communication protocol. This may be specifically set based on an actual requirement.

When obtaining, based on the identifier of the one or more communication protocols supported by the auxiliary device, the communication protocol that can be supported by the terminal device, and the preset communication rule, the target communication protocol for communicating with the auxiliary device, the terminal device may first obtain, based on the identifier, the communication protocol that can be supported by the auxiliary device. Then, the communication protocols supported by both the auxiliary device and the terminal device are obtained based on the communication protocol that can be supported by the auxiliary device and the communication protocol that can be supported by the terminal device. Then, the target communication protocol is obtained, according to the preset communication rule, from the communication protocols supported by both the auxiliary device and the terminal device.

For example, the preset communication rule may be that communication protocols with top N priorities are used as target communication protocols, where N is 1. If it is learned, based on the identifier, that the communication protocols that can be supported by the auxiliary device are the SparkLink Alliance protocol and the Bluetooth protocol, and the terminal device may also support the SparkLink Alliance protocol and the Bluetooth protocol. That is, the auxiliary device and the terminal device may support both the SparkLink Alliance protocol and the Bluetooth protocol, where a priority of the SparkLink Alliance protocol is higher than a priority of the Bluetooth protocol. In this case, the target communication protocol that may be obtained according to the preset communication rule is the SparkLink protocol.

It may be understood that, when it is learned that the terminal device and the auxiliary device can support only one communication protocol at the same time, the communication protocol may be directly used as the target communication protocol.

For example, if it is learned, based on the identifier, that the communication protocol that can be supported by the auxiliary device is the Bluetooth protocol, and the terminal device can support the SparkLink Alliance protocol and the Bluetooth protocol, that is, both the auxiliary device and the terminal device can support the Bluetooth protocol, it may be directly learned that the target communication protocol is the Bluetooth protocol.

For example, if it is learned, based on the identifier, that the communication protocols that can be supported by the auxiliary device are the Bluetooth protocol and the SparkLink Alliance protocol, and the terminal device can support the Bluetooth protocol, that is, both the auxiliary device and the terminal device can support the Bluetooth protocol, it may be directly learned that the target communication protocol is the Bluetooth protocol.

S308: The terminal device sends a communication protocol acknowledgement packet to the auxiliary device.

After the target communication protocol is obtained, the communication protocol acknowledgement packet may be sent to the auxiliary device via the wireless charging chip. The communication protocol acknowledgement packet is a data packet that is sent to acknowledge use of the target communication protocol, and the communication protocol acknowledgement packet includes information about the target communication protocol.

Optionally, the information about the target communication protocol in the communication protocol acknowledgment packet may be an identifier of the target communication protocol. For example, the SparkLink Alliance protocol is used as an example for description. Assuming that the auxiliary device supports the SparkLink Alliance protocol, the auxiliary device may send a protocol data packet "0x58 80 XXX (SparkLink)" to the terminal device according to the wireless charging protocol. Assuming that the terminal device learns, based on the identifier in the protocol data packet, that the target communication protocol for communicating with the auxiliary device is also the SparkLink Alliance protocol, the terminal device may send a communication protocol acknowledgment packet "0x5F 80 XXX (SparkLink)" to the auxiliary device.

It may be understood that, in this embodiment of this application, the terminal device may alternatively send the communication protocol acknowledgement packet to the auxiliary device according to the wireless charging protocol.

It may be understood that, because the communication protocol acknowledgement packet includes the information about the target communication protocol, the communication protocol packet is sent to the auxiliary device, to indicate the auxiliary device to transmit a connection address corresponding to the target communication protocol.

S309: The auxiliary device sends the connection address corresponding to the target communication protocol to the terminal device.

After receiving the communication protocol acknowledgement packet, the auxiliary device may obtain, based on information in the communication protocol acknowledgement packet, the target communication protocol for communicating with the terminal device. For example, after receiving the communication protocol acknowledgment packet "0x5F 80 XXX (SparkLink)", the auxiliary device may determine that the target communication protocol for communicating with the terminal device is the SparkLink Alliance protocol.

After obtaining the target communication protocol for communicating with the terminal device, the auxiliary device may send, to the terminal device, the connection address corresponding to the target communication protocol.

In this embodiment of this application, the auxiliary device may alternatively send an address information data packet to the terminal device according to the wireless charging protocol, where the address information data packet includes the connection address corresponding to the target communication protocol. For example, the auxiliary device may send an address information data packet "0x58 52 XXX (connection address)" to the terminal device according to the wireless charging protocol.

In some embodiments, considering that a length of the connection address is long, the connection address may be divided into a plurality of address information data packets and sent to the terminal device.

It should be noted that, in this embodiment of this application, the connection address is a MAC address. For example, when the target communication protocol is the Bluetooth protocol, the auxiliary device may send a Bluetooth MAC address to the terminal device. When the target communication protocol is the SparkLink Alliance protocol, the auxiliary device may send a SparkLink MAC address to the terminal device. It may be understood that, if the target communication protocol includes a plurality of communication protocols, the auxiliary device may send all the communication protocols included in the target communication protocol to the terminal device.

S310: The terminal device establishes a communication connection to the auxiliary device based on the connection address.

After receiving the connection address, the wireless charging chip of the terminal device may send the connection address to the power management module. The power management module sends the connection address to the accessory management service. After obtaining the connection address, the accessory management service may send a connection operation instruction to a short-range service, to notify the short-range service to initiate a connection to the auxiliary device. The connection operation instruction includes the connection address. After receiving the connection operation instruction, the short-range service may initiate the connection to the auxiliary device.

For example, the short-range service may control, via a short-range driver, a short-range chip to send a connection signal to the connection address through an antenna, to perform a directional connection. After receiving the connection signal, the auxiliary device may establish the communication connection to the terminal device in response to the connection signal. In this way, the terminal device can perform data transmission with the auxiliary device.

In actual application, the user may wirelessly charge the auxiliary device via only the terminal device, and the communication connection for data transmission does not need to be established. In view of this, to improve user experience and avoid a misoperation (misconnection), in this embodiment of this application, the step of establishing, by the terminal device, the communication connection to the auxiliary device based on the connection address may further include the following steps.
(1) When the target communication protocol is one of the one or more communication protocols supported by the auxiliary device, send a first connection prompt message to the user.
(2) After receiving an operation of determining the connection by the user, establish the communication connection to the auxiliary device based on the connection address.

After obtaining the connection address corresponding to the target communication protocol, the accessory management service of the terminal device may send an instruction to the pop-up window service, to indicate the pop-up window service to initiate a connection prompt message.

It may be understood that the instruction sent to the pop-up window service may include the connection address corresponding to the target communication protocol. After receiving the instruction, the pop-up window service may display the connection prompt message in the display interface of the terminal device.

Optionally, in this embodiment of this application, the pop-up window service may display the connection prompt message in the display interface of the terminal device in a style like a dialog box, a function box, or a dialog box.

In this embodiment of this application, when the target communication protocol is one of the one or more communication protocols supported by the auxiliary device, the pop-up window service may display the first connection prompt message in the display interface of the terminal device.

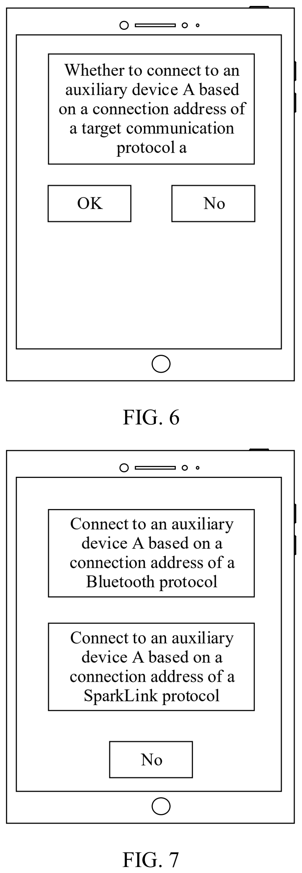

The first connection prompt message is a prompt message indicating whether the user establishes a connection to the auxiliary device according to the target communication protocol. For example, as shown in FIG. 6, when the pop-up window service displays the first connection prompt message in the display interface of the terminal device, the display interface of the terminal device may display dialog boxes "Whether to connect to an auxiliary device A based on a connection address of a target communication protocol a", "OK", and "No". It may be understood that, after the first connection prompt message is displayed, the user may select, based on the first connection prompt message, whether to connect to the auxiliary device according to the target communication protocol. When the user chooses to connect to the auxiliary device according to the target communication protocol, the user may tap the "OK" dialog box. The pop-up service may send a connection operation instruction to the short-range service in response to an operation of determining the connection by the user. After receiving the connection operation instruction, in response to the connection operation instruction, the short-range service initiates a connection operation on the auxiliary device, and controls, via the short-range driver, the short-range chip to send a signal to the connection address through the antenna, to perform a directional connection and establish the communication between the terminal device and the auxiliary device.

When the user chooses to reject the connection to the auxiliary device according to the target communication protocol, the user may tap the "No" dialog box. In response to the operation of rejecting the connection by the user, the pop-up service sends, to the accessory management service, information indicating that the user rejects the connection. After receiving the information indicating that the user rejects the connection, the accessory management service may not need to initiate the connection.

Considering that there may be a plurality of communication protocols for determining the target communication protocol for the communication connection, to facilitate establishment of the communication connection between the auxiliary device and the terminal device, in this embodiment of this application, the step of establishing, by the terminal device, the communication connection to the auxiliary device based on the connection address may further include the following steps.
(a) When the target communication protocol is at least two of the one or more communication protocols supported by the auxiliary device, send a second connection prompt message to the user.
(b) After receiving a target connection address for a connection specified by the user, establish the communication connection to the auxiliary device based on the target connection address.

The second connection prompt message includes the connection address of the target communication protocol, and the second connection prompt message is a prompt message indicating the user to determine, from the plurality of connection addresses, a connection address for which a connection needs to be established.

Correspondingly, the pop-up window service may display the second connection prompt message in the display interface of the terminal device. For example, as shown in FIG. 7, when the target communication protocol includes the Bluetooth protocol and the SparkLink protocol, when the pop-up window service displays the second connection prompt message in the display interface of the terminal device, dialog boxes "Connect to an auxiliary device A based on a connection address of a Bluetooth protocol", "Connect to an auxiliary device A based on a connection address of a SparkLink protocol", and "No" may be displayed in the display interface of the terminal device.

When the user chooses to connect to the auxiliary device A based on the connection address of the Bluetooth protocol, the user may tap the dialog box "Connect to an auxiliary device A based on a connection address of a Bluetooth protocol". The pop-up service learns, in response to the user operation, that the target connection address of the connection specified by the user is the connection address of the Bluetooth protocol, and sends a connection operation instruction to the short-range service based on the connection address of the Bluetooth protocol. The connection operation instruction may include the connection address of the Bluetooth protocol. After receiving the connection operation instruction, in response to the connection operation instruction, the short-range service initiates a connection operation on the auxiliary device, and controls, via the short-range driver, the short-range chip to send a signal to the connection address of the Bluetooth protocol through the antenna, to perform a directional connection and establish the communication between the terminal device and the auxiliary device.

When the user chooses to connect to the auxiliary device A based on the connection address of the SparkLink Alliance protocol, the user may tap the dialog box "Connect to an auxiliary device A based on a connection address of the SparkLink Alliance protocol". The pop-up service learns, in response to the user operation, that the target connection address of the connection specified by the user is the connection address of the SparkLink Alliance protocol, and sends a connection operation instruction to the short-range service based on the connection address of the SparkLink Alliance protocol. The connection operation instruction may include the connection address of the SparkLink Alliance protocol. After receiving the connection operation instruction, in response to the connection operation instruction, the short-range service initiates a connection operation on the auxiliary device, and controls, via the short-range driver, the short-range chip to send a signal to the connection address of the SparkLink Alliance protocol through the antenna, to perform a directional connection and establish the communication between the terminal device and the auxiliary device.

When the user chooses to reject the connection, the user may tap the "No" dialog box. In response to the operation of rejecting the connection by the user, the pop-up service sends, to the accessory management service, information indicating that the user rejects the connection. After receiving the information indicating that the user rejects the connection, the accessory management service may not need to initiate the connection.

In actual application, when a mode of the auxiliary device does not match a mode of the terminal device, for example, when a model of the auxiliary device does not match a model of the terminal device, a connection between the auxiliary device and the terminal device may also fail. To reduce workload and detect a connection mismatch problem in time, in this embodiment of this application, the auxiliary device may further send a mode identifier to the terminal device, and the terminal device may detect, based on the mode identifier, whether the auxiliary device matches the terminal device. Therefore, in this embodiment of this application, the method may further include the following steps.
(A) Obtain a connection detection result of the auxiliary device based on the mode identifier sent by the auxiliary device.
(B) If the connection detection result of the auxiliary device indicates that the auxiliary device can be connected, send a connection prompt message to the user.

After sending the connection address to the terminal device, the auxiliary device may send the mode identifier (Mode ID) to the terminal device.

In this embodiment of this application, the auxiliary device may alternatively send a mode identifier data packet to the terminal device according to the wireless charging protocol, where the mode identifier data packet includes mode information of the auxiliary device. For example, the auxiliary device may send a mode identifier data packet "0x58 54 XXX (mode identifier)" to the terminal device according to the wireless charging protocol.

The terminal device pre-stores mode identifiers of devices that can be connected. After receiving the mode identifier sent by the auxiliary device, the terminal device matches the mode identifier sent by the auxiliary device with the stored mode identifiers of the devices that can be connected. If a target mode identifier that matches the mode identifier sent by the auxiliary device is obtained from the stored mode identifiers of the devices that can be connected, a connection detection result indicating that the auxiliary device can be connected may be obtained. If a target mode identifier that matches the mode identifier sent by the auxiliary device is not obtained from the stored mode identifiers of the devices that can be connected, a connection detection result indicating that the auxiliary device cannot be connected may be obtained.

After obtaining the connection detection result indicating that the auxiliary device can be connected, the terminal device may send the connection prompt message to the user. It may be understood that, when the target communication protocol is one of the one or more communication protocols supported by the auxiliary device, the first connection prompt message is sent to the user; or when the target communication protocol is at least two of the one or more communication protocols supported by the auxiliary device, the second connection prompt message is sent to the user. For details, refer to the foregoing descriptions, details are not described herein. In this embodiment of this application, mode identifiers of auxiliary devices of a same type may be the same.

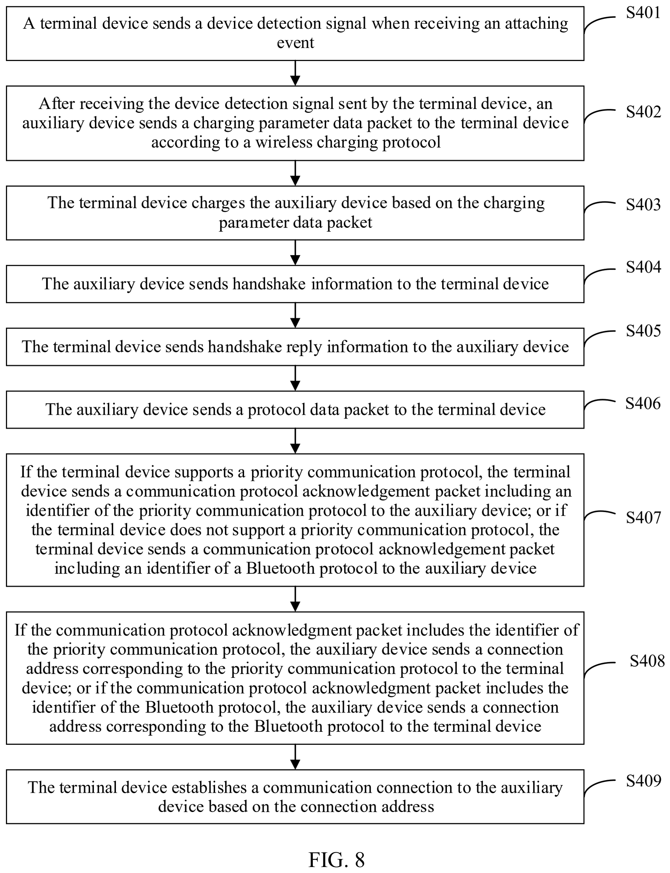

In actual application, a Bluetooth module is configured for most terminal devices and auxiliary devices, that is, most terminal devices and auxiliary devices may be connected according to a Bluetooth protocol. To reduce workload and improve connection efficiency, as shown in FIG. 8, the device connection method provided in this embodiment of this application may alternatively include steps S401 to S409.

S401: A terminal device sends a device detection signal when receiving an attaching event.

S402: After receiving the device detection signal sent by the terminal device, an auxiliary device sends a charging parameter data packet to the terminal device according to a wireless charging protocol.

S403: The terminal device charges the auxiliary device based on the charging parameter data packet.

S404: The auxiliary device sends handshake information to the terminal device.

S405: The terminal device sends handshake reply information to the auxiliary device.

For a specific process of steps S401 to S405, refer to steps S301 to S305. Details are not described herein again.

S406: The auxiliary device sends a protocol data packet to the terminal device, where the protocol data packet includes an identifier of a priority communication protocol supported by the auxiliary device.

The priority communication protocol is a communication protocol with a highest priority in one or more communication protocols supported by the auxiliary device, that is, a communication protocol according to which a connection is preferentially established.

In this embodiment of this application, when the auxiliary device can support a plurality of communication protocols, after receiving the handshake reply information, the auxiliary device may directly send the protocol data packet including the identifier of the priority communication protocol to the terminal device.

S407: If the terminal device supports the priority communication protocol, send a communication protocol acknowledgement packet including the identifier of the priority communication protocol to the auxiliary device; or if the terminal device does not support the priority communication protocol, send a communication protocol acknowledgement packet including an identifier of a Bluetooth protocol to the auxiliary device.

After obtaining the protocol data packet, the terminal device parses the protocol data packet to obtain an identifier of the protocol data packet, and obtains, based on the identifier of the protocol data packet, the priority communication protocol supported by the auxiliary device. After the priority communication protocol supported by the auxiliary device is obtained, if the terminal device may also support the priority communication protocol, the priority communication protocol may be used as a target communication protocol, and the communication protocol acknowledgement packet including the priority communication protocol is sent to the auxiliary device; or if the terminal device does not support the priority communication protocol, the Bluetooth protocol may be used as the target communication protocol, and the communication protocol acknowledgement packet including the identifier of the Bluetooth protocol is sent to the terminal.

S408: If the communication protocol acknowledgement packet includes the identifier of the priority communication protocol, the auxiliary device sends a connection address corresponding to the priority communication protocol to the terminal device; or if the communication protocol acknowledgement packet includes the identifier of the Bluetooth protocol, the auxiliary device sends a connection address corresponding to the Bluetooth protocol to the terminal device.

After obtaining the communication protocol acknowledgement packet, the auxiliary device parses the communication protocol acknowledgement packet. If the obtained communication protocol acknowledgement packet includes the identifier of the priority communication protocol, the auxiliary device sends the connection address corresponding to the priority communication protocol to the terminal device; or if the communication protocol acknowledgement packet includes the identifier of the Bluetooth protocol, the auxiliary device sends the connection address corresponding to the Bluetooth protocol to the terminal device. For a specific process of sending the connection address, refer to step S309. Details are not described herein again.

S409: The terminal device establishes a communication connection to the auxiliary device based on the connection address.

For a specific process of step S409, refer to S310. Details are not described herein again.

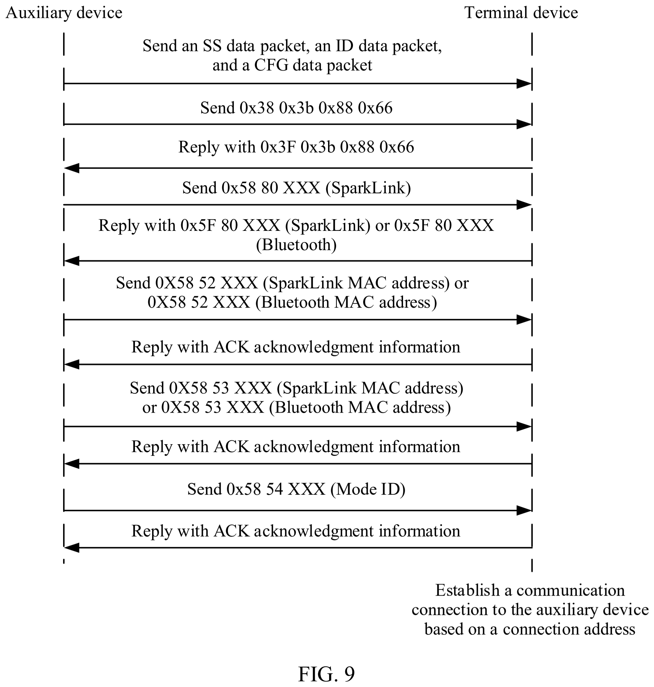

For example, as shown in FIG. 9, an example in which the priority communication protocol is a SparkLink Alliance protocol is used for description. When receiving the attaching event, the terminal device sends a ping signal. After receiving the device detection signal sent by the terminal device, the auxiliary device sends a signal strength data packet (SS data packet), an identification data packet (ID data packet), and a configuration parameter data packet (CFG data packet) to the terminal device according to the wireless charging protocol. The terminal device charges the auxiliary device based on the signal strength data packet, the identification data packet, and the configuration parameter data packet. After being powered on, the auxiliary device sends a proprietary protocol packet "0x38 0x3b 0x88 0x66" to the terminal device for handshake, and the terminal device sends a proprietary protocol packet "0x3F 0x3b 0x88 0x66" to the auxiliary device for handshake reply. After receiving the handshake reply, the auxiliary device sends a protocol data packet "0x58 80 XXX (SparkLink)" to the terminal device, that is, a protocol data packet including an identifier of the SparkLink Alliance protocol. After the terminal device receives the protocol data packet "0x58 80 XXX (SparkLink)", if the terminal device supports the SparkLink Alliance protocol, the terminal device may return a communication protocol acknowledgment packet "0x5F 80 XXX (SparkLink)" to the auxiliary device. If the terminal device does not support the SparkLink Alliance protocol, the terminal device may return a communication protocol acknowledgement packet "0x5F 80 XXX (Bluetooth)" to the auxiliary device. After the auxiliary device receives the communication protocol acknowledgment packet, if the communication protocol acknowledgment packet includes the identifier of the SparkLink Alliance protocol, the auxiliary device sends an address information data packet "0X58 52 XXX (SparkLink MAC address)" and an address information data packet "0X58 53 XXX (SparkLink MAC address)" to the terminal device. If the communication protocol acknowledgment packet includes the identifier of the Bluetooth protocol, the auxiliary device sends an address information data packet "0X58 52 XXX (Bluetooth MAC address)" and an address information data packet "0X58 53 XXX (Bluetooth MAC address)" to the terminal device.

After receiving the address information data packet, the terminal device may return ACK acknowledgment information to the auxiliary device, to indicate, to the auxiliary device, that sent data has been correctly received. Then, the auxiliary device may further send a mode identifier data packet "0x58 54 XXX (Mode-ID)" to the terminal device. After receiving the mode identifier data packet, the terminal device may also return the ACK acknowledgment information to the auxiliary device.

It may be understood that, after receiving a mode identifier and the connection address, the terminal device may perform a subsequent operation of establishing the communication connection to the auxiliary device. For details, refer to the foregoing descriptions of S310. Details are not described herein again.

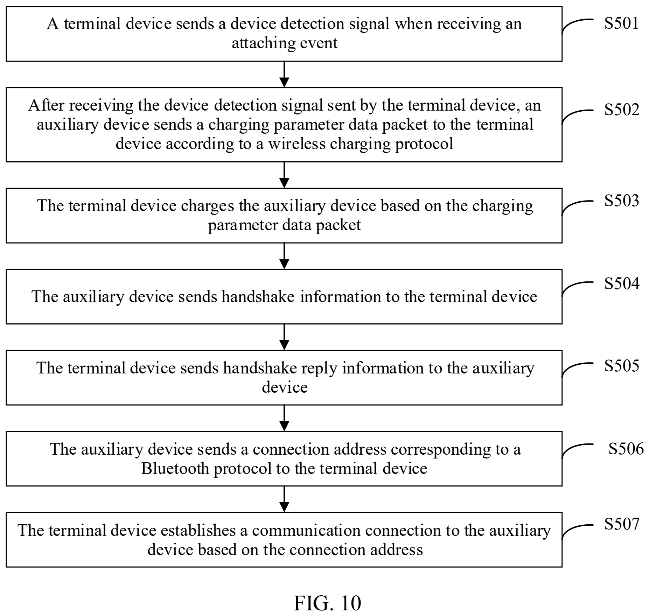

It should be noted that, when the auxiliary device supports only the Bluetooth protocol, after receiving the handshake reply information sent by the terminal device, the auxiliary device may directly send the connection address corresponding to the Bluetooth protocol to the terminal device. In view of this, as shown in FIG. 10, the device connection method in this embodiment of this application may alternatively include the following steps.

S501: A terminal device sends a device detection signal when receiving an attaching event.

S502: After receiving the device detection signal sent by the terminal device, an auxiliary device sends a charging parameter data packet to the terminal device according to a wireless charging protocol.

S503: The terminal device charges the auxiliary device based on the charging parameter data packet.

S504: The auxiliary device sends handshake information to the terminal device.

S505: The terminal device sends handshake reply information to the auxiliary device.

For a specific process of steps S501 to S505, refer to steps S301 to S305. Details are not described herein again.

S506: The auxiliary device sends a connection address corresponding to the Bluetooth protocol to the terminal device.

When the auxiliary device supports only the Bluetooth protocol, it is considered by default that the auxiliary device establishes a communication connection to the terminal device according to the Bluetooth protocol. Therefore, after receiving the handshake reply information sent by the terminal device, the auxiliary device may directly send the connection address corresponding to the Bluetooth protocol to the terminal device, so that the terminal device establishes the communication connection based on the connection address corresponding to the Bluetooth protocol.

S507: The terminal device establishes the communication connection to the auxiliary device based on the connection address.

After receiving the connection address, the terminal device may establish the communication connection to the auxiliary device based on the connection address. For a specific process, refer to S310. Details are not described herein again.

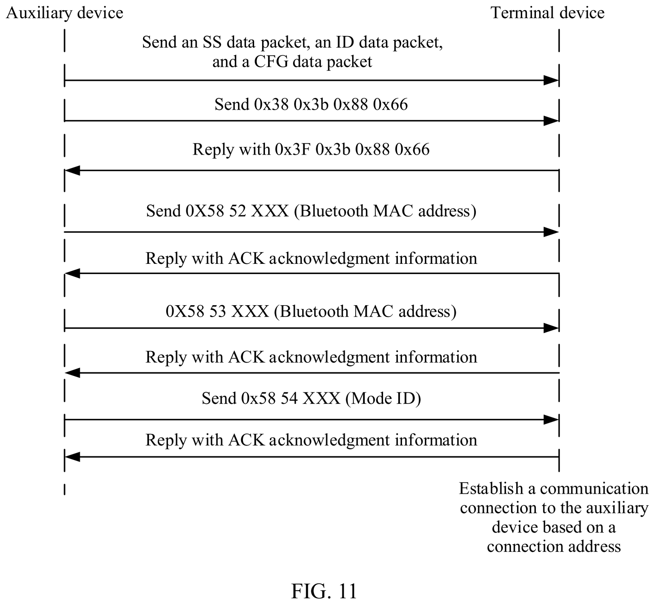

For example, as shown in FIG. 11, when receiving the attaching event, the terminal device sends a ping signal. After receiving the device detection signal sent by the terminal device, the auxiliary device sends a signal strength data packet (SS data packet), an identification data packet (ID data packet), and a configuration parameter data packet (CFG data packet) to the terminal device according to the wireless charging protocol. The terminal device charges the auxiliary device based on the signal strength data packet, the identification data packet, and the configuration parameter data packet. After being powered on, the auxiliary device sends a proprietary protocol packet "0x38 0x3b 0x88 0x66" to the terminal device for handshake, and the terminal device sends a proprietary protocol packet "0x3F 0x3b 0x88 0x66" to the auxiliary device for handshake reply. After receiving the handshake reply, the auxiliary device sends an address information data packet "0X58 52 XXX (Bluetooth MAC address)" and an address information data packet "0X58 53 XXX (Bluetooth MAC address)" to the terminal device. After receiving the address information data packet, the terminal device may return ACK acknowledgment information to the auxiliary device, to indicate, to the auxiliary device, that sent data has been correctly received. Then, the auxiliary device may further send a mode identifier data packet "Ox58 54 XXX (Mode ID)" to the terminal device. After receiving the mode identifier data packet, the terminal device may also return the ACK acknowledgment information to the auxiliary device.

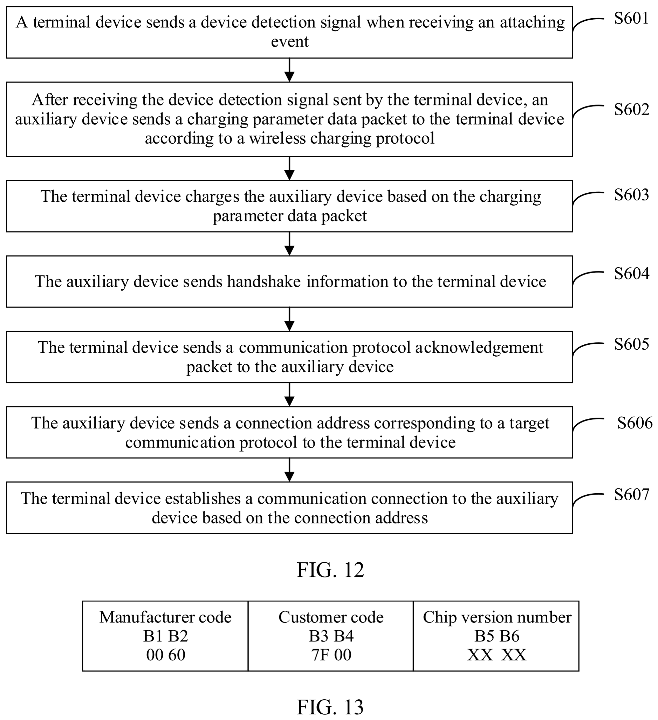

If a protocol data packet is separately transmitted, duration of the communication connection between the auxiliary device and the terminal device is increased, for example, duration from a time at which the auxiliary device is attached to a time at which a pop-up window prompt message is displayed is prolonged. To improve efficiency and reduce the duration of the communication connection between the auxiliary device and the terminal device, in this embodiment of this application, the protocol data packet may be an identification data packet generated according to the wireless charging protocol, and a communication protocol acknowledgement packet may alternatively be handshake reply information generated according to the wireless charging protocol. In view of this, as shown in FIG. 12, the device connection method provided in this embodiment of this application may alternatively include the following steps.

S601: A terminal device sends a device detection signal when receiving an attaching event.

S602: After receiving the device detection signal sent by the terminal device, an auxiliary device sends a charging parameter data packet to the terminal device according to a wireless charging protocol.

The charging parameter data includes a signal strength data packet, a configuration parameter data packet, and an identification data packet.

The identification data packet carries, through an identification field, an identifier of one or more communication protocols supported by the auxiliary device. A communication protocol supported by the auxiliary device may be determined by a manufacturer and a seller. Therefore, in this embodiment of this application, an identification field like a customer code or a manufacturer code may be used to carry the identifier of the one or more communication protocols supported by the auxiliary device.

For example, as shown in FIG. 13, the identification data packet includes identification fields such as a chip version number, a customer code, and a manufacturer code. Data information of the vendor code is in data bits B1 and B2, data information of the customer code is in data bits B3 and B4, and data information of the chip version number is in data bits B5 and B6. In this case, data information corresponding to B1 to B4 may carry the identifier of the communication protocol, that is, the data information corresponding to B1 to B4 may be used to represent the identifier of the communication protocol. For example, when the data information corresponding to B1 to B4 is 0x00 0x60 0x7F 0x00, it indicates that the auxiliary equipment supports a SparkLink Alliance protocol, and may also support a Bluetooth protocol.

It may be understood that, when communication protocols supported by the auxiliary device are different, data information corresponding to B1 to B4 is also different.

S603: The terminal device charges the auxiliary device based on the charging parameter data packet.

After receiving the charging parameter data packet, the terminal device may perform a charging operation on the auxiliary device based on the signal strength data packet and the configuration parameter data in the charging parameter data packet. For details, refer to S303. Details are not described herein again.

It may be understood that, after receiving the charging parameter data packet, the terminal device parses and identifies the identification data packet in the charging parameter data packet, to obtain the one or more communication protocols supported by the auxiliary device.

For example, the terminal device stores communication protocols corresponding to different data information in the identification field. After obtaining the data information of the identification field in the identification data packet, the terminal device may compare the data information of the identification field in the identification data packet with the stored data information, target data information that is the same as the data information of the identification field in the identification data packet is obtained from the stored data information, and a communication protocol corresponding to the target data information is determined as the communication protocol supported by the auxiliary device. For example, if the data information 0x00 0x60 0x7F 0x00 corresponding to the customer code and the vendor code in the identification data packet is obtained, 0x00 0x60 0x7F 0x00 may be compared with the stored data information, to obtain the communication protocol supported by the auxiliary device.

S604: The auxiliary device sends handshake information to the terminal device.

After the terminal device charges the auxiliary device, the auxiliary device is powered on, and the auxiliary device may send a handshake data packet to the terminal device. For a specific process, refer to S304. Details are not described herein again.

S605: The terminal device sends a communication protocol acknowledgement packet to the auxiliary device.

After obtaining the communication protocol supported by the auxiliary device, the terminal device may obtain a target communication protocol from the communication protocol supported by the auxiliary device. Then, after receiving the handshake information sent by the auxiliary device, the terminal device may send, to the auxiliary device as handshake reply information, the communication protocol acknowledgement packet including information about the target communication protocol.

Optionally, the information about the target communication protocol in the communication protocol acknowledgment packet may be field information indicating that the target communication protocol is used. For example, when the target communication protocol is the Bluetooth protocol, after the auxiliary device sends, to the terminal device according to the wireless charging protocol, a proprietary protocol packet with a header of "0x38 0x3b 0x88 0x66" for handshake, the terminal device may return a communication protocol acknowledgment packet "0x3F 0x3b 0x88 0x66" to the auxiliary device according to the wireless charging protocol, where 0x3F 0x3b 0x88 0x66 is field information of the Bluetooth protocol. When the target communication protocol is the SparkLink Alliance protocol, after the auxiliary device sends, to the terminal device according to the wireless charging protocol, a proprietary protocol packet with a header of "0x38 0x3b 0x88 0x66" for handshake, the terminal device may return a communication protocol acknowledgment packet "0x3F 0x3b 0x88 0x88" to the auxiliary device according to the wireless charging protocol, where 0x3F 0x3b 0x88 0x88 is field information of the SparkLink Alliance protocol.

In some implementations, when there are a plurality of target communication protocols, the terminal device may send, to the auxiliary device, communication protocol acknowledgement packets corresponding to the plurality of target communication protocols. For example, when the plurality of target communication protocols include the Bluetooth protocol and the SparkLink Alliance protocol, the terminal device may send a communication protocol acknowledgment packet corresponding to the Bluetooth protocol and a communication protocol acknowledgment packet corresponding to the SparkLink Alliance protocol to the auxiliary device.

It may be understood that for a specific process of obtaining the target communication protocol from the communication protocols supported by the auxiliary device, refer to S307. Details are not described herein again.

S606: The auxiliary device sends a connection address corresponding to the target communication protocol to the terminal device.

After receiving the communication protocol acknowledgement packet, the auxiliary device may obtain, based on information in the communication protocol packet, the target communication protocol for communicating with the terminal device.

The auxiliary device prestores information about the communication protocols supported by the auxiliary device. After obtaining the information in the communication protocol acknowledgement packet, the auxiliary device may perform matching on the information in the communication protocol acknowledgement packet and the prestored information, to obtain the target communication protocol for communicating with the terminal device.

After obtaining the target communication protocol for communicating with the terminal device, the auxiliary device may send, to the terminal device, the connection address corresponding to the target communication protocol.

For example, after receiving the communication protocol acknowledgement packet "0x3F 0x3b 0x88 0x66", the auxiliary device performs matching on the information "0x3F 0x3b 0x88 0x66" in the communication protocol acknowledgement packet, to learn that the target communication protocol for communicating with the terminal device is the Bluetooth protocol, and may further send a connection address corresponding to the Bluetooth protocol to the terminal device. After receiving the communication protocol acknowledgment packet "0x3F 0x3b 0x88 0x88", the auxiliary device performs matching on the information "0x3F 0x3b 0x88 0x88" in the communication protocol acknowledgment packet, to learn that the target communication protocol for communicating with the terminal device is the SparkLink Alliance protocol, and may further send a connection address corresponding to the SparkLink Alliance protocol to the terminal device.

S607: The terminal device establishes a communication connection to the auxiliary device based on the connection address.

For a specific process in which the terminal device establishes the communication connection to the auxiliary device based on the connection address, refer to S310. Details are not described herein again.

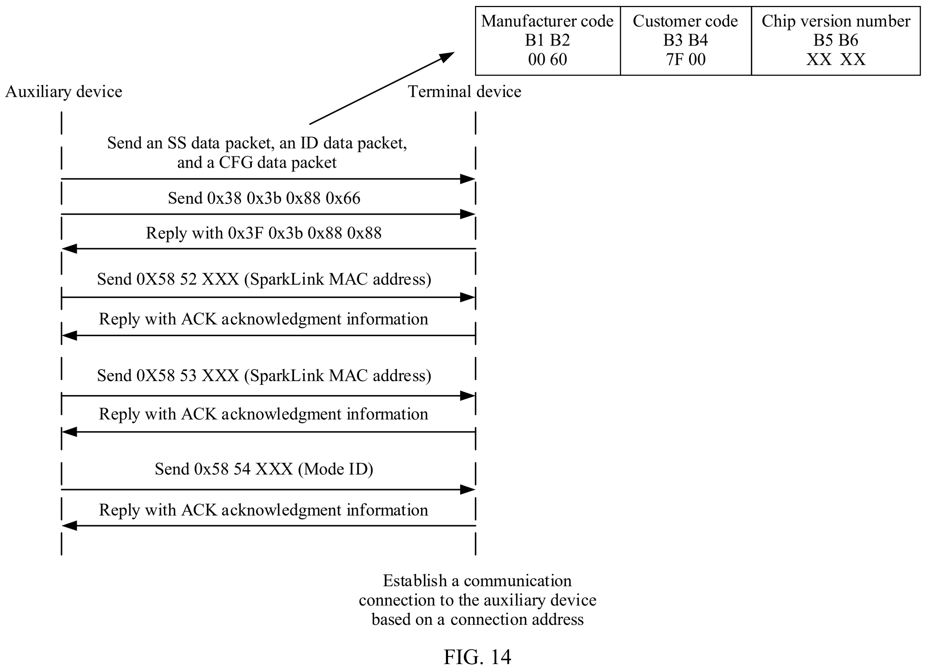

For example, as shown in FIG. 14, an example in which a priority communication protocol is the SparkLink Alliance protocol is used for description. When receiving the attaching event, the terminal device sends a ping signal. After receiving the device detection signal sent by the terminal device, the auxiliary device sends the signal strength data packet (SS data packet), the identification data packet (ID data packet), and the configuration parameter data packet (CFG data packet) to the terminal device according to the wireless charging protocol. The data information corresponding to B1 to B4 in the identification data packet is 0x00 0x60 0x7F 0x00. The terminal device charges the auxiliary device based on the signal strength data packet and the configuration parameter data packet. After being powered on, the auxiliary device sends the proprietary protocol packet "0x38 0x3b 0x88 0x66" to the terminal device for handshake, and the terminal device sends the communication protocol acknowledgment packet "0x3F 0x3b 0x88 0x88" to the auxiliary device for handshake reply. After receiving the communication protocol acknowledgment packet, the auxiliary device sends an address information data packet "0X58 52 XXX (SparkLink MAC address)" and an address information data packet "0X58 53 XXX (SparkLink MAC address)" to the terminal device. After receiving the address information data packet, the terminal device may return ACK acknowledgment information to the auxiliary device, to indicate, to the auxiliary device, that sent data has been correctly received. Then, the auxiliary device may further send a mode identifier data packet "0x58 54 XXX (Mode ID)" to the terminal device. After receiving the mode identifier data packet, the terminal device may also return the ACK acknowledgment information to the auxiliary device.

It may be understood that, after receiving a mode identifier and the connection address, the terminal device may perform a subsequent operation of establishing the communication connection to the auxiliary device. For details, refer to the foregoing descriptions. Details are not described herein again.

In this embodiment of this application, the identification data packet carries the identifier of the one or more communication protocols supported by the auxiliary device, and the handshake reply information carries the information about the target communication protocol, thereby reducing duration of the communication connection between the auxiliary device and the terminal device, and improving processing efficiency.

In this embodiment of this application, the wireless charging protocol carries identifiers and connection addresses of different communication protocols, so that the target communication protocol compatible with the terminal device and the auxiliary device can be automatically determined and connected, to ensure connection stability and reduce a transmission delay between the terminal device and the auxiliary device.

In this embodiment of this application, the terminal device may actively pop up a connection prompt message box about 2s after the auxiliary device is attached, so that a user operation is more convenient. In addition, after the auxiliary device is attached, a MAC address and a mode ID are transparently transmitted, so that one-to-one connection between the terminal device and an accessory can be implemented.

In this embodiment of this application, a terminal device that supports both SparkLink and Bluetooth may be connected to a Bluetooth accessory, or may be connected to a SparkLink accessory. An accessory that supports both SparkLink and Bluetooth may be connected to a Bluetooth terminal device, or may be connected to a SparkLink terminal device. The accessory and the terminal that support both SparkLink and Bluetooth are preferentially connected through SparkLink.

Based on a same inventive concept, an embodiment of this application provides an electronic device. The electronic device may be the terminal device or the auxiliary device in the foregoing embodiments. The electronic device may specifically include a communication interface, a memory, a processor, and one or more computer programs. The communication interface, the memory, and the processor may be connected through one or more communication buses. The one or more computer programs are stored in the memory and are configured to be executed by the processor. When the one or more computer programs are executed by the processor, functions or steps in the foregoing device connection method are implemented.

An embodiment of this application further provides a computer-readable storage medium. The computer-readable storage medium stores computer program instructions. When the computer program instructions are executed by a processing circuit, functions or steps in the foregoing device connection method are implemented.

In addition, an embodiment of this application may further provide a chip system. The chip system includes a processing circuit and a storage medium. The storage medium stores computer program instructions. When the computer program instructions are executed by the processing circuit, functions or steps in the foregoing device connection method are implemented.

In addition, an embodiment of this application may further provide a computer program product including instructions. When the computer program product runs on a computer, the computer is enabled to perform functions or steps in the foregoing device connection method.

In addition, an embodiment of this application may further provide a communication system. The communication system includes an auxiliary device and a terminal device. The terminal device and the auxiliary device may be configured to perform functions or steps in the foregoing device connection method.

In addition, an embodiment of this application may further provide an operating system. When the operating system is run on a computer, the computer is enabled to perform functions or steps in the foregoing device connection method.

According to the descriptions of the foregoing implementations, a person skilled in the art may clearly understand that, for the purpose of convenient and brief description, for specific working processes of the chip system, the electronic device, the computer-readable storage medium, the computer program product including the instructions, the communication system, and the operating system described above, refer to the corresponding processes in the foregoing method embodiments. Details are not described herein again.

It may be understood that methods or algorithm steps described with reference to embodiments of this application may be implemented by hardware, or may be implemented by a processor by executing software instructions. The software instructions may include a corresponding software module. The software module may be stored in a random access memory, a flash storage, an erasable programmable read-only memory, an electrically erasable programmable read-only memory, a register, a disk, a removable hard disk, a compact disc read-only memory, or a storage medium in any other form. For example, the storage medium is coupled to the processor, so that the processor can read information from the storage medium and write information to the storage medium. Certainly, the storage medium may be a component of the processor. The processor and the storage medium may be located in an application-specific integrated circuit (Application Specific Integrated Circuit, ASIC). In addition, the ASIC may be located in an electronic device. Certainly, the processor and the storage medium may alternatively exist in the electronic device as discrete components.

In an optional manner, when software is used for implementation, all or some of the implementations may be implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive solid state disk (SSD)), or the like.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A device connection method, applied to a terminal device, wherein the method comprises:
receiving a protocol data packet from an auxiliary device, wherein the protocol data packet comprises an identifier of one or more communication protocols supported by the auxiliary device;
obtaining, based on the identifier of the one or more communication protocols supported by the auxiliary device, a target communication protocol for communicating with the auxiliary device;
sending a communication protocol acknowledgement packet to the auxiliary device, wherein the communication protocol acknowledgement packet comprises information about the target communication protocol;
receiving, from the auxiliary device, a connection address corresponding to the target communication protocol; and
establishing a communication connection to the auxiliary device based on the connection address.

2. The device connection method according to claim 1, wherein the protocol data packet is an identification data packet generated according to a wireless charging protocol, and the identification data packet carries the identifier of the one or more communication protocols through an identification field.

3. The device connection method according to claim 2, wherein before receiving the protocol data packet from the auxiliary device, the method further comprises:
sending a device detection signal when receiving an attaching event, wherein the device detection signal is used to detect whether the auxiliary device exists, and the protocol data packet is sent by the auxiliary device after the auxiliary device receives the device detection signal.

4. The device connection method according to claim 3, wherein after receiving the protocol data packet from the auxiliary device, the method further comprises:
charging the auxiliary device based on a charging parameter data packet sent by the auxiliary device, wherein the charging parameter data packet is generated by the auxiliary device according to the wireless charging protocol after the auxiliary device receives the device detection signal; and
sending the communication protocol acknowledgement packet to the auxiliary device comprises:
sending the communication protocol acknowledgement packet to the auxiliary device after receiving handshake information sent by the auxiliary device, wherein the communication protocol acknowledgement packet is a data packet used to reply to the handshake information, and the handshake information is sent by the auxiliary device to the terminal device after the auxiliary device starts to be charged.

5. The device connection method according to claim 1, wherein before receiving the protocol data packet from the auxiliary device, the method further comprises:
sending a device detection signal when receiving an attaching event, wherein the device detection signal is used to detect whether the auxiliary device exists;
after receiving a charging parameter data packet sent by the auxiliary device, charging the auxiliary device based on the charging parameter data packet, wherein the charging parameter data packet is generated by the auxiliary device according to a wireless charging protocol after the auxiliary device receives the device detection signal; and
sending handshake reply information to the auxiliary device after receiving handshake information sent by the auxiliary device, wherein the protocol data packet is a data packet sent by the auxiliary device after the auxiliary device receives the handshake reply information.

6. The device connection method according to any one of claims 1 to 5, wherein obtaining, based on the identifier of the one or more communication protocols supported by the auxiliary device, the target communication protocol for communicating with the auxiliary device comprises:
obtaining, based on the identifier of the one or more communication protocols supported by the auxiliary device, a communication protocol that can be supported by the terminal device, and a preset communication rule, the target communication protocol for communicating with the auxiliary device.

7. The device connection method according to any one of claims 1 to 6, wherein the target communication protocol is one of the one or more communication protocols supported by the auxiliary device, and establishing the communication connection to the auxiliary device based on the connection address comprises:
sending a connection prompt message to a user, wherein the connection prompt message is a prompt message indicating whether the user establishes a connection to the auxiliary device according to the target communication protocol; and
after receiving an operation of determining the connection by the user, establishing the communication connection to the auxiliary device based on the connection address.

8. The device connection method according to any one of claims 1 to 6, wherein the target communication protocol is at least two of the one or more communication protocols supported by the auxiliary device, and establishing the communication connection to the auxiliary device based on the connection address comprises:
sending a connection prompt message to a user, wherein the connection prompt message comprises the connection address of the target communication protocol, and the connection prompt message is a prompt message that indicates the user to determine, from a plurality of connection addresses, a connection address for which a connection needs to be established; and
after receiving a target connection address for a connection specified by the user, establishing the communication connection to the auxiliary device based on the target connection address.

9. The device connection method according to claim 7 or 8, wherein sending the connection prompt message to the user comprises:
obtaining a connection detection result of the auxiliary device based on a mode identifier sent by the auxiliary device; and
if the connection detection result of the auxiliary device indicates that the auxiliary device can be connected, sending the connection prompt message to the user.

10. The device connection method according to any one of claims 1 to 9, wherein the communication protocol is a wireless short-range communication protocol, and the wireless short-range communication protocol comprises a SparkLink Alliance protocol and a Bluetooth protocol.

11. A device connection method, applied to an auxiliary device, wherein the method comprises:
sending a protocol data packet to a terminal device, wherein the protocol data packet comprises an identifier of one or more communication protocols supported by the auxiliary device;
receiving a communication protocol acknowledgement packet sent by the terminal device;
obtaining, based on information in the communication protocol acknowledgement packet, a target communication protocol for communicating with the terminal device; and
sending a connection address corresponding to the target communication protocol to the terminal device, wherein the connection address indicates the terminal device to establish a communication connection based on the connection address.

12. The device connection method according to claim 11, wherein sending the protocol data packet to the terminal device comprises:
sending the protocol data packet to the terminal device when receiving a device detection signal sent by the terminal device, wherein the protocol data packet is an identification data packet generated according to a wireless charging protocol, and the identification data packet carries the identifier of the one or more communication protocols through an identification field.

13. The device connection method according to claim 12, wherein before receiving the communication protocol acknowledgement packet sent by the terminal device, the method further comprises:
sending handshake information to the terminal device in response to a charging operation performed by the terminal device based on a charging parameter data packet, wherein the communication protocol acknowledgement packet is sent by the terminal device after the terminal device receives the handshake information, and the charging parameter data packet is generated by the auxiliary device according to the wireless charging protocol after the auxiliary device receives the device detection signal, and is sent to the terminal device.

14. The device connection method according to claim 11, wherein sending the protocol data packet to the terminal device comprises:
sending a charging parameter data packet to the terminal device when receiving a device detection signal sent by the terminal device;
sending handshake information to the terminal device in response to a charging operation performed by the terminal device based on the charging parameter data packet; and
sending the protocol data packet to the terminal device after receiving handshake reply information sent by the terminal device.

15. The device connection method according to any one of claims 11 to 14, wherein after sending the connection address corresponding to the target communication protocol to the terminal device, the method further comprises:
sending a mode identifier to the terminal device, wherein the mode identifier is used to assist the terminal device in determining a connection detection result of the auxiliary device.

16. The device connection method according to any one of claims 11 to 15, wherein the communication protocol is a wireless short-range communication protocol, and the wireless short-range communication protocol comprises a SparkLink Alliance protocol and a Bluetooth protocol.

17. An electronic device, comprising:
a memory, configured to store computer program instructions; and
a processor, configured to execute the computer program instructions, to support the electronic device in implementing the method according to any one of claims 1 to 10 or the method according to any one of claims 11 to 16.

18. A computer-readable storage medium, wherein the computer-readable storage medium stores computer program instructions, and when the computer program instructions are executed by a processing circuit, the method according to any one of claims 1 to 10 or the method according to any one of claims 11 to 16 is implemented.

19. A chip system, wherein the chip system comprises a processing circuit and a storage medium, the storage medium stores computer program instructions, and when the computer program instructions are executed by the processing circuit, the method according to any one of claims 1 to 10 or the method according to any one of claims 11 to 16 is implemented.

20. An operating system, wherein when the operating system is run on a computer, the computer is enabled to perform the method according to any one of claims 1 to 10 or perform the method according to any one of claims 11 to 16.

21. A computer program product comprising instructions, wherein when the computer program product runs on a computer, the computer is enabled to perform the method according to any one of claims 1 to 10 or perform the method according to any one of claims 11 to 16.
